# EUROPEAN PATENT SPECIFICATION

(11) **EP 3 408 178 B1**
(45) Date of publication and mention of the grant of the patent: **15.11.2023**
(21) Application number: 16887827.0
(22) Date of filing: 19.05.2016
(51) Int. Cl.: B64U 70/97, B64C 39/02, G05D 1/06

(54) **CENTERING AND LANDING PLATFORM FOR HOVERING FLYING VEHICLES**
ZENTRIER- UND LANDEPLATTFORM FÜR EIN SCHWEBEFLUGZEUG
PLATEFORME DE CENTRAGE ET D'ATTERRISSAGE POUR VÉHICULES DE VOL STATIONNAIRE

(30) Priority: 28.01.2016 WO PCT/IL2016/050094
(43) Date of publication of application: 05.12.2018
(73) Proprietor: Airobotics Ltd., 4969107 Petah Tikva (IL)
(72) Inventor: KRAUSS, Ran, 6334221 Tel Aviv (IL); KLINER, Meir, 5236905 Ramat Gan (IL)
(74) Representative: Studio Torta S.p.A.
(86) International application number: PCT/IL2016/050534
(87) International publication number: WO 2017/130181

(56) References cited:
- EP-A2- 2 218 642
- WO-A1-2007/141795
- WO-A1-2013/171735
- CN-U- 204 250 382
- DE-A1-102014 003 417
- DE-A1-102014 003 417
- US-A- 5 039 034
- US-A1- 2014 284 423

## Description

### Field of the Invention

The present invention relates to hovering flying vehicles. More particularly, the invention relates to a landing platform suitable to guide such flying vehicles to land at a desired location thereon.

### Background of the Invention

Hovering flying objects, such as drones, are becoming increasingly common in use nowadays and, in many applications, they fly autonomously. Accordingly, one of the problems encountered nowadays relates to issues associated with the autonomous landing, when it is desired that such landing take place at a precise location on a landing platform. Many different solutions have been offered, including various ways to "grab" the drone during the landing procedure, or the provision of cumbersome appendices to be attached to the drone, all of which render the process complex and expensive and which lack precision.

The term "drone", as used herein, is meant to refer to all flying objects that may be brought to an essentially vertical landing autonomously on a landing platform, regardless of whether at some other time during their flight they are guided or supervised by a human or other system. This term will be used throughout this description, for the sake of brevity.

It is an object of the present invention to provide a method and system suitable to overcome the drawbacks of the prior art, and to facilitate the landing of a drone on a landing platform.

Patent document WO 2013/171735 relates to systems and methods for point take-off and landing of unmanned flying objects, onto a confined landing surface associated with a landing body.

Patent document WO 2007/141795 relates to tethered airborne platforms, in particular to such platforms that are heavier-than-air air vehicles, and that may be applied for uses including surveillance from a static or moving ground station.

Patent document EP2218642 addresses launch, retrieval and servicing aircraft, especially in turbulent winds or onto an irregularly-moving surface.

Patent document DE102014003417 relates to a method for overcoming distances outside the range of battery-operated aircraft and a charging or battery changing station for battery-operated aircraft.

However, the above-mentioned issues are not overcome.

### Summary of the Invention

The present invention relates to a landing platform for a hovering vehicle and to a method for assisting in the landing of a hovering vehicle, as defined in the annexed claims.

The following summary of the present disclosure relates to embodiments not covered by the invention defined by the claims. The present disclosure relates, in one aspect, to a landing platform comprising a trapping element suitable to securely hold a weight attached to a cable. The trapping element can be located at the center of said substantially closed volume or elsewhere. In a further aspect, the trapping element comprises an electromagnetic element and the weight is made of a material that is attracted by magnetic forces. In this context, the term "substantially closed volume" is meant to indicate a volume the boundaries of which are clearly defined by delimiting elements, even though gaps may exist that allow passage into and out of said volume.

In one aspect of the disclosure, the borders of the boundary element are quasi-continuum, by which is meant that gaps may exist in its circumference. In another aspect of the disclosure the boundary element comprises mechanical elements. In still another aspect of the disclosure the boundary element comprises magnetic elements and in yet aspect of the disclosure the boundary element comprises pneumatic elements.

The disclosure also encompasses a method for assisting in the landing of a hovering vehicle, comprising causing a weight to be lowered from said vehicle and erecting a boundary element such that said weight favors remaining within its boundaries, and encouraging the movement of said weight toward a trapping element located inside the boundaries of said boundary element, said trapping element being suitable to securely fasten said weight thereto.

### Brief Description of the Drawings

In the drawings:
Fig. 1A is a schematic representation of a drone suitable for use with the system of the invention;
Fig. 1B is a bottom view of the drone of Fig. 1A;
Fig. 2 is a schematic description of the first stage of a landing procedure according to one embodiment of the invention;
Fig. 3 shows a landing platform according to a particular embodiment of the invention at the beginning of the preparations for landing;
Fig. 4 is a cross-section of the landing platform taken along the AA axis of Fig. 2;
Fig. 5A shows an intermediate position of centering aids according to a particular embodiment of the invention in perspective view;
Fig. 5B shows the intermediate position of centering aids of Fig. 5A in side view;
Fig. 6A shows the final position of centering aids, in perspective view;
Fig. 6B shows the final position of the centering aids of Fig. 6A, in side view;
Fig. 6C is the same cross-section as in Fig. 4, taken in the final position of the centering aids; and
Fig. 7 schematically illustrates as an example not falling under the scope of the claims the general structure of the capturing system including a boundary element and a trapping element.

### Detailed Description of the Invention

The invention will be better understood through the description of one particular embodiment of the invention, it being understood that this specific embodiment is not meant to limit the invention in any way and is only provided for the purpose of illustration.

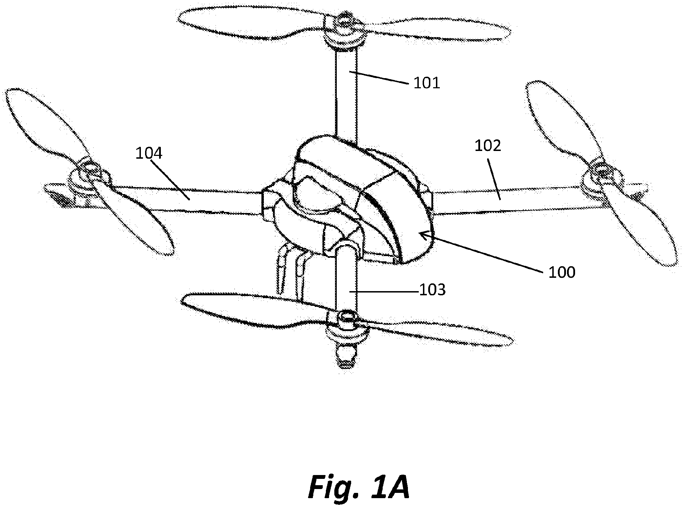

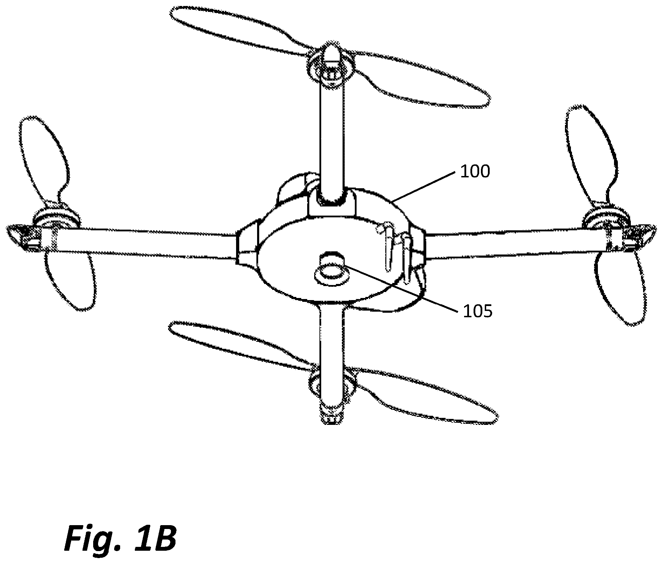

A drone suitable for use with the system according to the invention is schematically illustrated in Fig. 1A, in perspective view, where 100 indicates the main body of the drone, to which four arms 101-104, each provided with a propeller, are attached. Fig. 1B shows the drone of Fig. 1A, viewed from the bottom and reveals a winch assembly 105, which will be further described hereinafter.

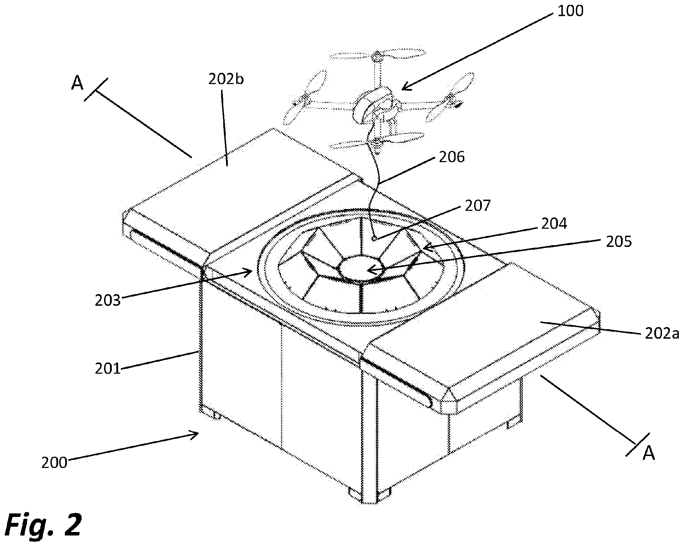

Winch assembly 105 is designed to release a cable from the drone, which is provided with a weight, as schematically shown in Fig. 2, in which the cable is indicated by numeral 206 and the weight by 207. Fig 2 shows an early stage of the approach for landing of drone 100 toward a platform 200, provided with a base, 201, covering elements 202a and 202b, landing platform 203, provided with centering aids 204 and centering magnetic assembly, 205, all of which will be explained in greater detail hereinafter.

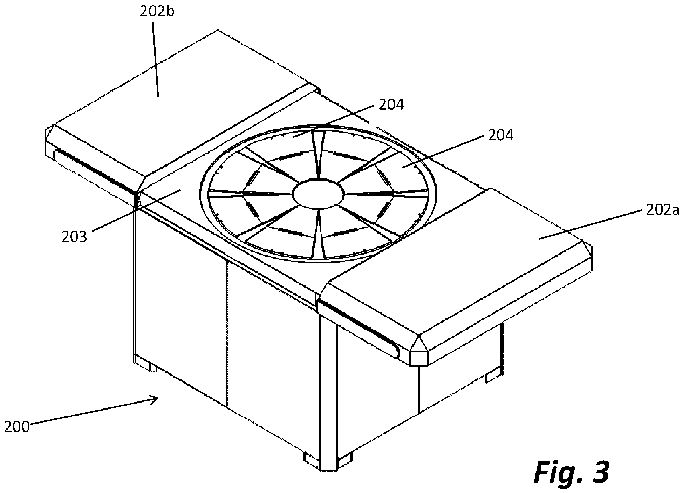

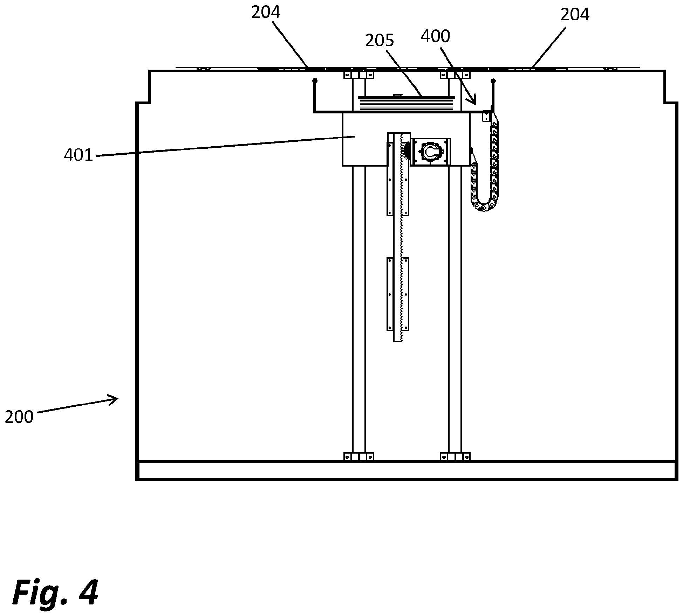

Turning now to Fig. 3, platform 200 is shown at the beginning of the preparations for landing. Covering elements 202a and 202b, which in a non-operating condition (not shown) covered landing platform 203, are now moved aside to expose it by a linear displacing mechanism (not shown). Centering aids 204, consisting in the figure of 8 trapezoidal segments, are in non-operative position, i.e., are essentially flat at platform 203 level or below it. Fig. 4, which is a cross-section of the platform 200, taken along the AA axis of Fig. 2, shows an actuation mechanism 400 that is designed to move centering aids 204 so as to change their angle relative to the surface of landing platform 203. In Fig. 4 mechanism 400 is in a resting position, i.e., centering aids 204 are flat, as shown in Fig. 3. As actuating assembly 401 moves upwards, centering aids are raised.

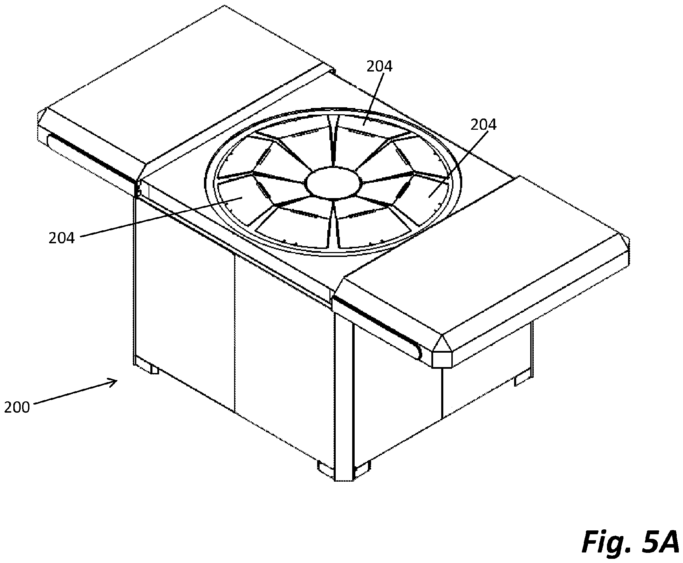

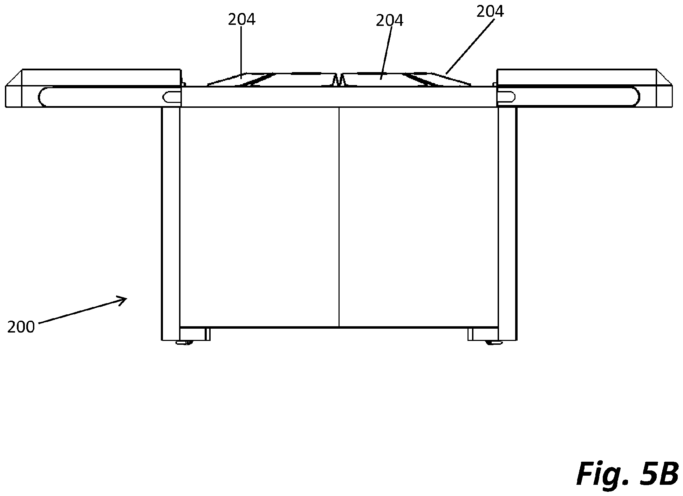

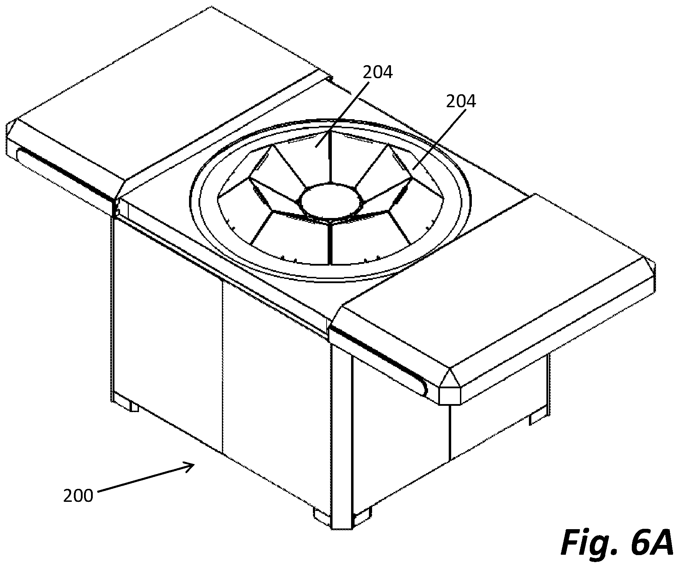

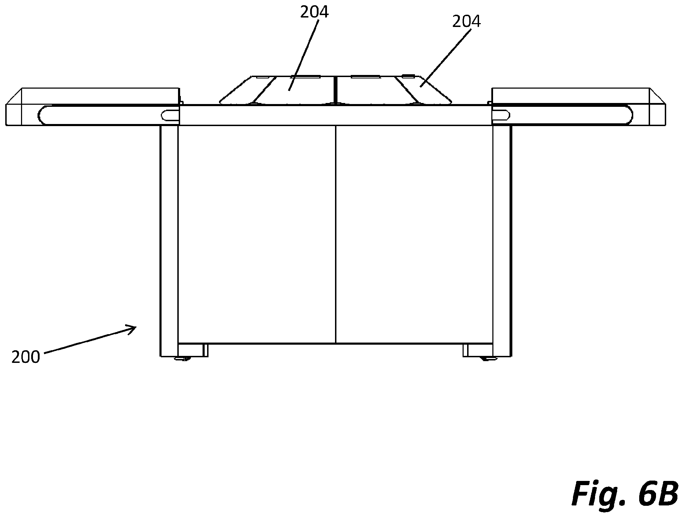

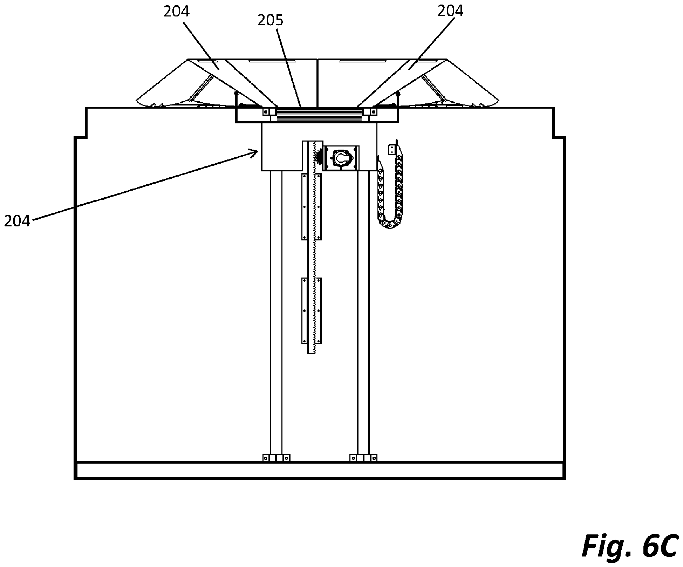

Figs. 5A and 5B show an intermediate position of centering aids 204, in perspective and in side view, respectively. Figs. 6A and 6B show the final position of centering aids 204, in perspective and in side view, respectively. Fig. 6C is the same cross-section as in Fig. 4, taken in the final position of centering aids 204.

Centering magnetic assembly 205 (Fig. 2), also referred to herein as "trapping element", comprises elements suitable to create a strong electromagnetic field that converges toward its center. Weight 207, which is attached to cable 206, is made of ferromagnetic material that is attracted by the magnetic forces generated by centering magnetic assembly 205. However, because of environmental or technical reasons, weight 207 may not always reach close enough to the center of the landing platform, to be captured by the magnetic forces. Therefore, centering aids 204 are used to define an enclosed volume, with the magnetic assembly 205 at its center, such that no matter where weight 207 touches, when lowered by the drone's winch, it will always be directed toward the center, where the magnetic forces will tether it to the landing platform. Additional fastening means (not shown) can be provided, to maintain the weight at the center of the landing platform, once captured. Once the drone is securely tethered to the landing platform, the winch is activated and the cable is wound, while pulling the drone down toward landing. Centering aids 204 are flattened again, to provide a flat landing space, although in some embodiments they may be partially or fully left in an erected state, if the size of the drone permits. Landing platform 203 may then be lowered together with the drone, if desired, and if it is required to store the drone, covering elements 202a and 202b can be slid close. When the boundary element is mechanical in nature, it is possible to flatten it either autonomously, by synchronizing its motion with the approach of the drone, or the weight of the drone can be used to flatten it. Different mechanisms can be devised for this purpose, which will be apparent to the skilled person, for instance using springs, counterweights, or hydraulic arrangements.

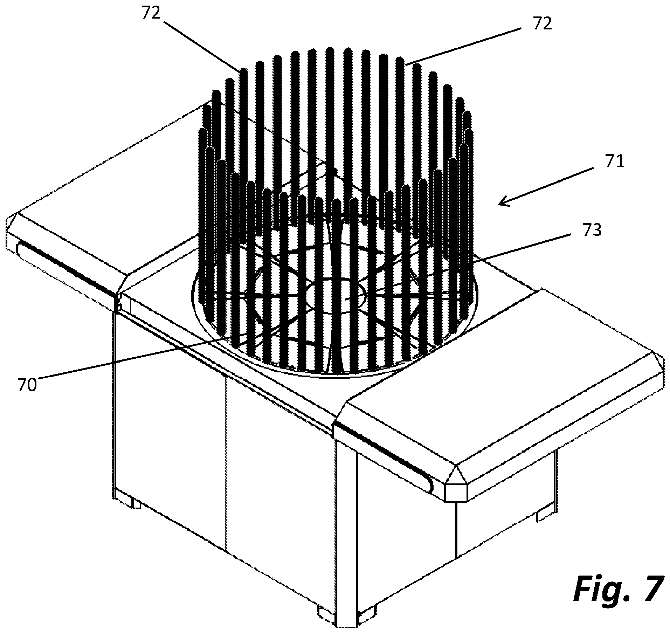

Having now illustrated the invention through a detailed, specific embodiment thereof, it will be easier to understand its broader reach and scope. Fig. 7 illustrates as an illustrative example not falling under the scope of the claims, a landing platform and uses the same box structure described earlier, for the sake of simplicity, it being understood that the shape and structure of the parts that are not involved in the landing step are not essential to the invention, can be of any other type, and do not limit the invention in any way. For instance, the invention could be implemented on a ship or on the top of a building, where no box or cover exist.

Broadly speaking, the landing platform of the invention comprises a landing surface, generally indicated at 70, which is the surface on which the drone will rest after landing. The landing surface can be of any type as long as it is suitable for the drone to rest on and, e.g., can be rough or smooth, plane or sloped, fixed or movable. It can further be provided with accessories, e.g., for locking the drone in place once landed, as one might wish to do, for instance if the landing platform is located on a ship and particularly in rough weather.

A boundary element 71 is any means suitable to define a volume of space within which the drone will find itself while approaching surface 70 for landing. A simple example of a boundary element 71 is the cone defined by centering aids 204 described with reference to Figs. 2 through 6. However, it is important to understand that boundary element 71 can be of very many kinds, as will be explain in greater detail below, as long as it fulfills the following conditions:
1 - it defines a substantially closed space that defines a volume suitable to house the drone after landing; and
2 - its boundaries are not fixed and can be partially or fully erected and retracted at will.

While often the positioning of the weight will be at the center of the landing platform that is not an essential element of the invention, inasmuch as landing platforms of different geometries can be devised for different needs, which may not have the optimal landing place at their center.

The term "erected", as used herein, should be understood to not be limited to physical erection, as in the example of Figs. 2-6, but to apply to any creation of limiting boundaries, be they tangible or not.

In Fig. 7, which describes an illustrative example not falling under the scope of the claims, the schematic representation of boundary element 71 consists of a plurality of individual elements 72, which together form a quasi-continuum (and in some cases, even a continuum). For example, elements 72 may represent a magnetic field with a component directed toward the center of plan 70, which may be useful for directing a ferromagnetic weight, such as weight 207 of Fig. 2, toward the center. However, electromagnetic forces are only one example of suitable centering aids. In another example weight 207 is not made of a ferromagnetic material and elements 72 are air streams caused by a plurality of strong blowers (or by a blower with split channels) that create each a stream of air with a radial component, such that the weight 207 is directed toward the center of the platform. Utilizing blowers has the advantage of being not only easy to start and end, but also the air stream can be adjusted in strength easily at will. As will be apparent to the skilled person from the above examples, many different boundary elements can be provided, with physical, magnetic, aerodynamic, etc. presence, and the invention is not limited to any particular technique for providing it. Similarly, the weight 207 can be of many different kinds and should be adapted to the specific boundary technique employed. However, for the sake of simplicity this element will be referred to as "weight" throughout, even though in some cases an actual weight may not be required to correctly position the cable that will tether the drone to the landing platform.

Once the weight is inside the boundary element 71 and has reached its center area, it is captured by trap 73 using a securing mechanism, which can be of any type suitable to maintain the weight in its position and which, of course, has to be adapted to the type and shape of weight employed. The securing mechanism can be mechanic, electromagnetic, hydraulic or pneumatic, or any combination of the above. The actual nature of the securing mechanism is not important, as long as it fulfills the above requirements.

Trap 73 may be located at the landing platform level or above or below it and may be movable. So, for instance, once the weight has been captured, the trap may be lowered below the landing platform level.

The above description of preferred embodiments has been provided for the purpose of illustration and is not meant to limit the invention in any way, except as defined in the appended claims.

## Claims

1. A landing platform apparatus (200) for a hovering vehicle (100), said landing platform apparatus comprising an erectable and retractable boundary element that consists of a plurality of individual mechanical elements which, when in an erected position, defines a substantially closed space,
wherein said boundary element defining the substantially closed space defines a volume suitable to house said hovering vehicle (100) after landing,
**characterized in that** each of the individual mechanical elements is a trapezoidal element (204) and each of the individual mechanical elements of said boundary element is a centering aid (204) configured to center said hovering vehicle within the substantially closed space,
said landing platform apparatus (200) further comprising an actuation mechanism (400) connected to each of the mechanical element centering aids (204) and configured to change an angle of each of the centering aids relative to a surface (70) of the landing platform (203), wherein the mechanical element centering aids (204) define a cone.

2. The landing platform apparatus according to claim 1, further comprising a trapping element (205) suitable to securely hold a weight (207) attached to a cable (206).

3. The landing platform apparatus according to claim 2, wherein said trapping element (205) is located at a center of said substantially closed space.

4. The landing platform apparatus according to claim 2, wherein the trapping element (205) comprises an electromagnetic element that is configured to attract the weight (207) positioned within the substantially closed space and which is made of a material that is attracted by magnetic forces.

5. The landing platform apparatus of claim 1, wherein borders of said boundary element are quasi-continuum.

6. A method for assisting in landing of a hovering vehicle (100) comprising erecting a retractable boundary element consisting of a plurality of individual mechanical elements for a landing platform (203) which defines a substantially closed space,
**characterized in that** each of the mechanical elements is a trapezoidal element (204),
said method further comprising the steps of:
changing an angle of the plurality of mechanical trapezoidal elements (204) defining the erected boundary element relative to a surface (70) of the landing platform (203), from an essentially flat non-operative position, to define a cone;
centering the hovering vehicle (100) within the substantially closed space during landing; and
allowing the hovering vehicle to be housed within a volume defined by the substantially closed space after landing.

7. The method of claim 6, further comprising the step of encouraging movement of a weight (207) lowered from said hovering vehicle (100) toward a trapping element (205) located at the center of the substantially closed space, said trapping element being suitable to securely fasten said weight thereto to assist in the landing of said hovering vehicle.

8. The method of claim 6, wherein the boundary element is partially erected.

## Patentansprüche

1. Landeplattformvorrichtung (200) für ein schwebendes Fahrzeug (100), wobei besagte Landeplattformvorrichtung ein aufstellbares und einziehbares Begrenzungselement umfasst, das aus einer Vielzahl individueller mechanischer Elemente besteht, welche, wenn in einer aufgestellten Position befindlich, einen weitgehend geschlossenen Raum definieren, wobei besagtes Begrenzungselement, das den weitgehend geschlossenen Raum definiert, ein Volumen definiert, das geeignet ist, besagtes schwebendes Fahrzeug (100) nach der Landung aufzunehmen, **dadurch gekennzeichnet, dass** jedes der individuellen mechanischen Elemente ein trapezförmiges Element (204) ist und jedes der individuellen mechanischen Elemente des besagten Begrenzungselements eine Zentrierhilfe (204) ist, die konfiguriert ist, um besagtes Fahrzeug innerhalb des weitgehend geschlossenen Raums zu zentrieren, besagte Landeplattformvorrichtung (200) ferner einen Betätigungsmechanismus (400) umfasst, verbunden mit jeder der Zentrierhilfen (204) der mechanischen Elemente und konfiguriert, um einen Winkel jeder der Zentrierhilfen relativ zu einer Oberfläche (70) der Landeplattform (203) zu ändern, wobei die Zentrierhilfen (204) der mechanischen Elemente einen Kegel definieren.

2. Landeplattformvorrichtung (200) nach Anspruch 1, die ferner ein Fangelement (205) umfasst, das zum sicheren Halten eines an einem Kabel (206) befestigten Gewichts (207) geeignet ist.

3. Landeplattformvorrichtung (200) nach Anspruch 2, wobei sich das Fangelement (205) im Zentrum des weitgehend geschlossenen Raums befindet.

4. Landeplattformvorrichtung (200) nach Anspruch 2, wobei das Fangelement (205) ein elektromagnetisches Element umfasst, das konfiguriert ist, um das platzierte Gewicht (207) in dem weitgehend geschlossenen Raum anzuziehen, und welches aus einem Material hergestellt ist, das durch magnetische Kräfte angezogen wird.

5. Landeplattformvorrichtung (200) nach Anspruch 1, wobei die Grenzen des besagten Begrenzungselements quasi-kontinuierlich sind.

6. Verfahren zur Lande-Unterstützung eines schwebenden Fahrzeugs (100), umfassend das Errichten eines einziehbaren Begrenzungselements, bestehend aus einer Vielzahl individueller mechanischer Elemente für eine Landeplattform (203), welche einen weitgehend geschlossenen Raum definieren, **dadurch gekennzeichnet, dass** jedes der mechanischen Elemente ein trapezförmiges Element (204) ist, wobei das Verfahren ferner die folgenden Schritte umfasst:
Ändern eines Winkels der Vielzahl von mechanischen trapezförmigenElementen (204), die das aufgestellte Begrenzungselement definieren, relativ zu einer Oberfläche (70) der Landeplattform (203), von einer im Wesentlichen flachen, nicht-operativen Position zu einem Kegel (?);
Zentrieren des schwebenden Fahrzeugs (100) innerhalb des weitgehend geschlossenen Raums während der Landung; und
Ermöglichen, dass das schwebende Fahrzeug (100) nach der Landung in einem durch den weitgehend geschlossenen Raum definierten Volumen aufgenommen werden kann.

7. Verfahren nach Anspruch 6, welches ferner den Schritt umfasst, die Bewegung eines von besagtem schwebendem Fahrzeug (100) herabgelassenen Gewichts (207) in Richtung eines im Zentrum des weitgehend geschlossenen Raums befindlichen Fangelements (205) zu fördern, wobei besagtes Fangelement geeignet ist, besagtes Gewicht sicher daran zu befestigen, um die Landung des besagten schwebenden Fahrzeugs (100) zu unterstützen.

8. Verfahren nach Anspruch 6, wonach das Begrenzungselement teilweise aufgerichtet ist.

## Revendications

1. Appareil de plateforme d'atterrissage (200) pour un véhicule en vol stationnaire (100), ledit appareil de plateforme d'atterrissage comprenant un élément de délimitation déployable et rétractable qui est constitué d'une pluralité d'éléments mécaniques individuels qui, en position déployée, définit un espace sensiblement fermé,
dans lequel ledit élément de délimitation définissant l'espace sensiblement fermé définit un volume approprié pour loger ledit véhicule en vol stationnaire (100) après un atterrissage,
**caractérisé en ce que** chacun des éléments mécaniques individuels est un élément trapézoïdal (204) et chacun des éléments mécaniques individuels dudit élément de délimitation est une aide au centrage (204) configurée pour centrer ledit véhicule en vol stationnaire à l'intérieur de l'espace sensiblement fermé,
ledit appareil de plateforme d'atterrissage (200) comprenant en outre un mécanisme d'actionnement (400) relié à chacune des aides au centrage d'élément mécanique (204) et configuré pour changer un angle de chacune des aides au centrage par rapport à une surface (70) de la plateforme d'atterrissage (203), dans lequel les aides au centrage d'élément mécanique (204) définissent un cône.

2. Appareil de plateforme d'atterrissage selon la revendication 1, comprenant en outre un élément de piégeage (205) approprié pour maintenir solidement un poids (207) fixé à un câble (206).

3. Appareil de plateforme d'atterrissage selon la revendication 2, dans lequel ledit élément de piégeage (205) est situé à un centre dudit espace sensiblement fermé.

4. Appareil de plateforme d'atterrissage selon la revendication 2, dans lequel l'élément de piégeage (205) comprend un élément électromagnétique qui est configuré pour attirer le poids (207) positionné à l'intérieur de l'espace sensiblement fermé et qui est constitué d'un matériau qui est attiré par des forces magnétiques.

5. Appareil de plateforme d'atterrissage selon la revendication 1, dans lequel des bords dudit élément de délimitation sont un quasi-continuum.

6. Procédé d'aide à l'atterrissage d'un véhicule en vol stationnaire (100) comprenant le déploiement d'un élément de délimitation déployable et rétractable consistant en une pluralité d'éléments mécaniques individuels pour une plateforme d'atterrissage (203) qui définit un espace sensiblement fermé,
**caractérisé en ce que** chacun des éléments mécaniques est un élément trapézoïdal (204),
ledit procédé comprenant en outre les étapes consistant à :
changer un angle de la pluralité d'éléments mécaniques trapézoïdaux (204) définissant l'élément de délimitation déployé par rapport à une surface (70) de la plateforme d'atterrissage (203), à partir d'une position non fonctionnelle plate, pour définir un cône ;
centrer le véhicule en vol stationnaire (100) à l'intérieur de l'espace sensiblement fermé lors de l'atterrissage ; et
permettre au véhicule en vol stationnaire d'être logé à l'intérieur d'un volume défini par l'espace sensiblement fermé après l'atterrissage.

7. Procédé selon la revendication 6, comprenant en outre l'étape consistant à encourager un mouvement d'un poids (207) abaissé à partir dudit véhicule en vol stationnaire (100) vers un élément de piégeage (205) situé au centre de l'espace sensiblement fermé, ledit élément de piégeage étant approprié pour fixer solidement ledit poids à celui-ci pour aider à l'atterrissage dudit véhicule en vol stationnaire.

8. Procédé selon la revendication 6, dans lequel l'élément de délimitation est partiellement déployé.
